# DEMANDE DE BREVET EUROPEEN

(11) **EP 1 468 868 A2**
(43) Date de publication de la demande: **20.10.2004**
(21) Numéro de dépôt: 04364027.5
(22) Date de dépôt: 02.04.2004
(51) Int. Cl.: B60N 2/28, B60R 22/30

(54) **Dispositif de liaison d'un siège pour enfant dans un véhicule automobile à indicateur de tension, et siège pour enfant correspondant**

(30) Priorité: 02.04.2003 FR 0304121
(71) Demandeur: AMPAFRANCE, 49309 Cholet (FR)
(72) Inventeur: Rabeony, Haja, 49300 Cholet (FR); Biaud, Richard, 49360 Toutlemonde (FR)
(74) Mandataire: Vidon, Patrice

(57) **Abrégé**

L'invention concerne un dispositif de liaison d'un siège pour enfant avec une première portion de sangle dans un véhicule automobile comprenant deux éléments de liaison mobiles l'un par rapport à l'autre entre une position de repos et une position de travail, prise lorsque ladite première portion de sangle est tendue, des moyens de rappel tendant à ramener lesdits éléments de liaison dans ladite position de repos, et des moyens indicateurs de tension permettant de distinguer si ledit dispositif de liaison est dans ladite position de repos ou dans ladite position de travail.

## Description

Le domaine de l'invention est celui de la puériculture, et plus précisément des sièges pour enfant destinés à être montés dans un véhicule automobile. Plus précisément, l'invention concerne le contrôle de la bonne mise en place et de la fixation adéquate d'un tel siège dans un véhicule automobile.

Depuis longtemps différents types de sièges pour enfant sont prévus pour être montés dans les véhicules automobiles. Le plus souvent ces sièges pour enfant sont solidarisés au siège du véhicule sur lequel ils sont montés à l'aide de la ceinture de sécurité présente dans le véhicule à cet emplacement.

Selon les cas, cette ceinture peut agir directement sur le siège, par exemple en circulant à l'arrière du dossier de ce dernier, dans des emplacements prévus à cet effet. D'autres types de sièges ont été développés, qui prévoient une embase sur laquelle ils viennent se solidariser. C'est alors généralement cette embase qui est solidarisée au siège du véhicule.

La ceinture de sécurité des véhicules étant désormais équipée d'enrouleurs, on obtient généralement une tension suffisante pour maintenir efficacement le siège, même en cas de mouvement brutal dû par exemple à un freinage d'urgence. Dans certains cas, des systèmes complémentaires de pré-tension sont en outre prévus.

Récemment, on a également proposé d'équiper les véhicules automobiles d'éléments fixes, accessibles entre l'assise et le dossier du siège de l'automobile, et prévus pour coopérer avec des éléments complémentaires prévus sur le siège pour enfant.

Cette technique est connue sous le nom de norme "isofix". Elle s'avère relativement avantageuse en termes de facilité de montage du siège pour enfant, puisqu'il suffit d'encliqueter le siège pour enfant sur les éléments correspondants du véhicule sans qu'il soit nécessaire de faire appel à la ceinture de sécurité ce qui est souvent considéré par les utilisateurs comme une opération relativement complexe. En outre, la solidarisation est alors efficace, et le risque de mauvaise utilisation est réduit.

Cependant, on a constaté que cette technique présentait des inconvénients, dans certaines conditions. En effet, la fixation n'est réalisée qu'en une zone, correspondant sensiblement à la liaison entre l'assise et le dossier du siège pour enfant. En cas de coup de frein brusque par exemple, ou de choc, on comprend que le siège pour enfant risque de basculer vers l'avant, en s'enfonçant dans l'assise du siège de l'automobile, ce qui présente bien entendu un danger important pour l'enfant.

Ayant observé cela, les offices de normalisation ont exigé la présence d'un point de fixation supplémentaire placé au voisinage de la partie supérieure du dossier, de façon à éviter, ou à tout le moins limiter, ce déplacement vers l'avant. Pour cela, on prévoit une sangle, montée sur la partie supérieure du dossier, et qui devra être solidarisée au véhicule.

L'invention se place également dans le cadre des sièges pour enfant équipés d'un tel dispositif.

Pour garantir la sécurité de l'enfant, il faut bien entendu non seulement que la sangle soit présente, mais encore qu'elle soit correctement solidarisée au véhicule et suffisamment tendue pour éviter les déplacements du siège pour enfant vers l'avant.

L'invention a notamment pour objectif de fournir une technique permettant aux utilisateurs de vérifier aisément et efficacement qu'une telle sangle est tendue, et donc que le siège est correctement installé.

En d'autre termes, un objectif de l'invention est de fournir une telle technique, qui permette d'assurer la sécurité de l'enfant transporté, et qui permette aisément à l'utilisateur de contrôler.

Un autre objectif de l'invention est de fournir une telle technique, qui ne nécessite pas de moyens complexes coûteux, et qui soit facile à réaliser et à monter.

Encore un autre objectif est de fournir une telle technique, qui soit facile à utiliser par tout utilisateur, et qui permette le cas échéant un réglage.

Ces objectifs, ainsi que d'autres qui apparaîtront plus clairement par la suite, sont atteints selon l'invention à l'aide d'un dispositif de liaison d'un siège pour enfant avec une première portion de sangle dans un véhicule automobile, comprenant deux éléments de liaison mobiles l'un par rapport à l'autre entre une position de repos et une position de travail, prise lorsque ladite première portion de sangle est tendue, des moyens de rappel tendant à ramener lesdits éléments de liaison dans ladite position de repos et des moyens indicateurs de tension permettant de distinguer si ledit dispositif de liaison est dans ladite position de repos ou dans ladite position de travail.

Ainsi, il est possible de constater rapidement et de façon sûre que la fixation du siège est bien assurée, en ce qui concerne ce dispositif de liaison, sans moyens complexes ou coûteux.

De façon préférentielle, un premier desdits éléments de liaison porte au moins une fenêtre laissant apparaître un indicateur solidaire du second desdits éléments de liaison, l'aspect dudit indicateur étant différent selon que ledit dispositif de liaison se trouve dans ladite position de repos ou dans ladite position de travail.

Ainsi, dans un mode de réalisation avantageux, ledit indicateur peut présenter des couleurs différentes selon que ledit dispositif de liaison se trouve dans ladite position de repos ou dans ladite position de travail. En complément ou à titre d'alternative, il peut également s'agir d'un mot et/ou d'un symbole.

Selon un premier mode de mise en oeuvre de l'invention, l'un desdits éléments de liaison est monté sur ledit siège. Dans ce cas, il peut notamment être monté au voisinage de la partie supérieure du dossier du siège, ou de l'embase de celui-ci.

Selon un second mode de mise en oeuvre de l'invention, l'un desdits éléments mobiles est relié audit siège par une seconde portion de sangle.

Selon une caractéristique avantageuse de l'invention, au moins un des éléments de liaison comprend des moyens de réglage de la longueur de ladite première et/ou seconde portions de sangle.

Dans ce cas, lesdits moyens de réglage peuvent par exemple comprendre deux logements parallèles dans lesquels circule ladite portion de sangle.

Selon un premier mode de réalisation avantageux, lesdits moyens de rappel comprennent au moins un ressort s'étendant parallèlement à l'axe du mouvement desdits éléments mobiles l'un par rapport à l'autre.

Lesdits éléments de liaison sont alors avantageusement mobiles en translation l'un par rapport à l'autre.

Selon un premier mode de réalisation avantageux, lesdits moyens de rappel comprennent au moins un ressort de torsion ou spiral.

Dans ce cas notamment, lesdits moyens indicateurs peuvent avantageusement comprendre et/ou coopérer avec une pièce mobile en rotation.

Selon une autre caractéristique avantageuse de l'invention, lesdits moyens indicateurs peuvent comprendre au moins un contact électrique.

Notamment, le ou lesdits contacts électriques peuvent agir sélectivement sur au moins un élément lumineux, lorsque ledit dispositif de liaison est dans une desdites positions. On peut également prévoir un signal audible (qui n'est bien sur pas permanent, mais émis au moment d'un changement de position).

L'invention concerne également les sièges pour enfant destiné à être monté dans un véhicule automobile, comprenant ou coopérant avec un dispositif de liaison tel que décrit ci-dessus.

De façon préférentielle, ledit dispositif de liaison est alors monté en partie supérieure du dossier dudit siège ou de son embase.

Avantageusement, ce siège comprend également des moyens de fixation à des éléments rigides prévus à cet effet dans un véhicule automobile.

D'autres caractéristiques et avantages de l'invention apparaîtront à la lecture de la description suivante d'un mode de réalisation préférentiel, donné à titre de simple exemple illustratif et non limitatif et des dessins annexés parmi lesquels :
- la figure 1 illustre de façon schématique un siège pour enfant équipé d'un dispositif de liaison selon l'invention ;
- la figure 2 est une vue du dispositif de liaison de la figure 1 ;
- la figure 3 présente de façon plus précise les moyens du dispositif de la figure 2 ;
- la figure 4 est une vue en coupe du dispositif de la figure 3 ;
- la figure 5 illustre, en coupe, un autre mode de réalisation de l'invention, basé sur un élément mobile en rotation.

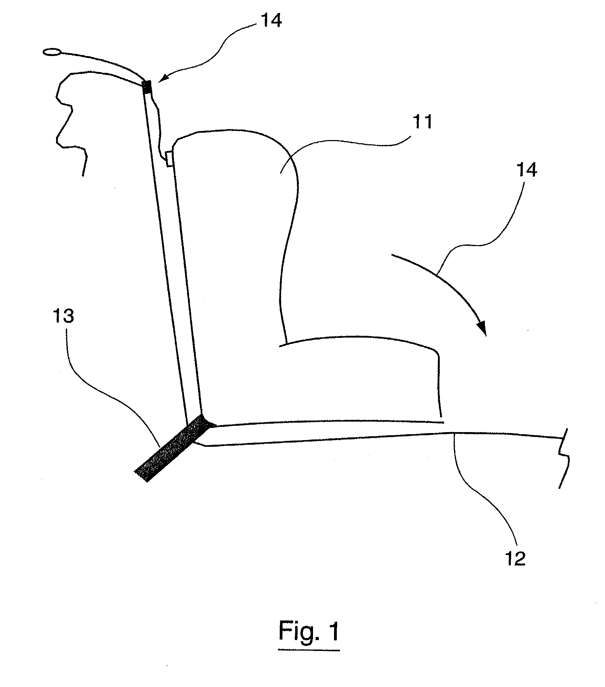

L'invention est donc destiné à équiper les sièges pour enfant, destinés à être montés dans un véhicule automobile tel que par exemple celui illustré schématiquement en figure 1.

Ce siège 11 est rapporté sur une banquette arrière 12 d'un véhicule automobile, et solidarisé à ce dernier à l'aide de moyens rigides 13 prévus à cet effet, et accessible entre le dossier et l'assise de la banquette 12.

Cette technique est connue sous le terme "isofix" et a fait l'objet d'une normalisation.

Comme déjà indiqué, on constate que, si cette technique est pratique et ergonomique, elle présente cependant un inconvénient en cas de choc ou de coup de frein brusque. En effet, le siège pour enfant a alors tendance à se déplacer vers l'avant et vers le bas, comme illustré par la flèche 14.

Pour éviter ce problème, le normalisateur a prévu la présence d'une sangle 14, montée sur la partie supérieure du dossier du siège 11, et prévue pour être accrochée à des moyens adéquats prévus à cet effet dans le véhicule.

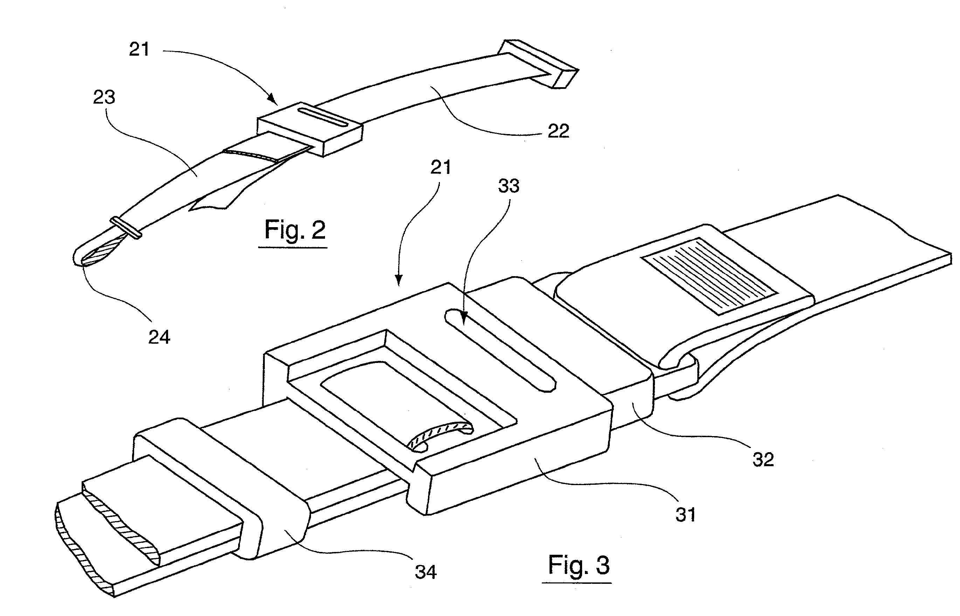

L'invention concerne plus précisément cet aspect. Un mode de réalisation d'un dispositif de liaison de la partie supérieure du dossier du siège pour enfant avec le véhicule est illustré en figure 2. Il comprend un bloc de liaison 21, qui relie deux portions de sangle :
- une première portion de sangle 22 reliée au dossier du siège pour enfant ;
- une seconde portion de sangle 23, équipée ici d'un crochet 24, destiné à l'accrochage sur le véhicule. Cette seconde portion de sangle a par exemple une longueur comprises entre un et deux mètres.

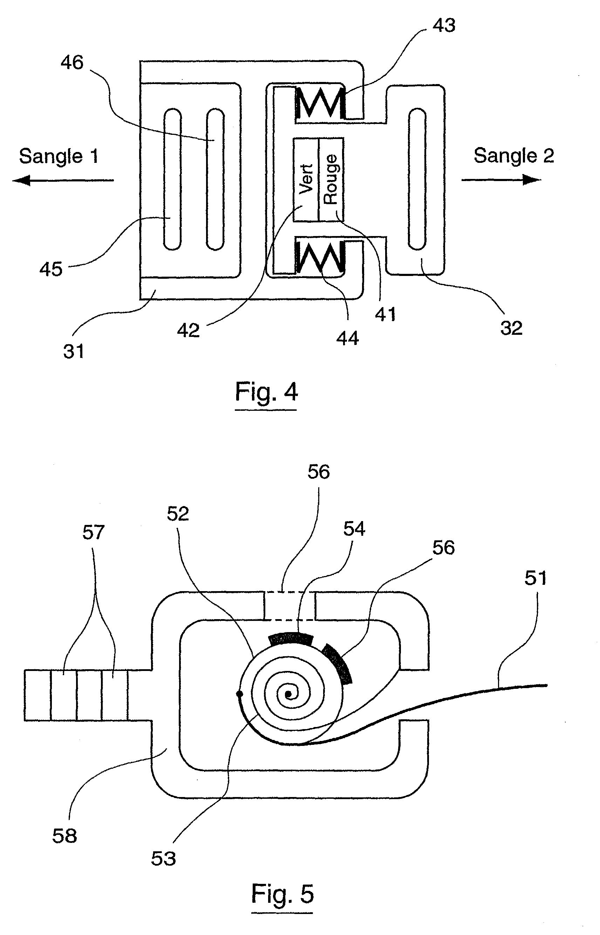

Comme cela apparaît sur la figure 3, et mieux encore sur la vue en coupe correspondante de la figure 4, ce bloc de liaison est constitué, selon l'invention de deux éléments de liaison 31 et 32 mobiles l'un par rapport à l'autre. Cette mobilité est bien sûr réduite, mais est conçue pour définir deux positions distinctes :
- une position de repos, lorsque les portions de sangle 22 et 23 ne sont pas tendues ;
- une position de travail lorsque ces portions de sangle sont tendues (le cas échéant, un seuil de tension minimal peut être prévu pour passer à la position de travail).

L'élément de liaison 31 comporte une fenêtre 33, qui permet de voir deux portions distinctes de l'élément de liaison 32 selon que l'on se trouve en position de repos ou en position de travail.

Selon un mode de réalisation particulier, chacune de ces portions 41 et 42 se voit attribuer des couleurs différentes. Par exemple, classiquement, en position de repos, on verra au travers de la fenêtre la portion 41 de couleur rouge, qui indique à l'utilisateur un danger (en l'occurrence le fait que le siège est mal fixé). En revanche, si les sangles sont tendues, on pourra voir apparaître la portion 42, de couleur verte, indiquant à l'utilisateur que le montage est correct.

Bien sûr, d'autres modes de signalisation peuvent être utilisés, à titre d'alternative ou de compléments. Les portions 41 et 42 pourront par exemple laisser apparaître respectivement les messages tendus et non tendus, ou tout autre message adéquat. Une signalisation électrique (lumineuse et/ou sonore) peut également être prévue, pour indiquer soit l'une des positions, soit un passage de l'un à l'autre.

Comme on le voit sur la figure 4, des moyens de rappel 43 et 44 sont prévus entre les deux éléments de liaison 31 et 32. sur la figure 4, il s'agit de deux ressorts placés symétriquement et agissant parallèlement au sens du déplacement des éléments de liaison l'un par rapport à l'autre. Ces ressorts sont configurés pour amener le système dans la position de repos, en l'absence d'efforts appliqués sur les portions de sangle.

Ainsi, au repos, on obtient directement et simplement l'indication"rouge". Dès qu'une tension est appliquée sur une portion de sangle, les deux éléments de liaison 31 et 32 tendent à s'éloigner l'un de l'autre, en comprimant les ressorts 43 et 44. L'indicateur devient alors "vert", indiquant que les sangles sont tendues.

Avantageusement, les moyens de liaison comprennent en outre des moyens de réglage de la longueur d'au moins une des deux portions de sangle 22 et 23. Dans l'exemple illustré aux figures 3 et 4, ces moyens de réglage sont constitués classiquement de deux fentes parallèles, et s'étendant perpendiculairement à l'axe de la portion de sangle 23.

Par ailleurs, le mouvement de translation de l'élément 32 par rapport à l'élément 3 peut être remplacé par un autre type de mouvement. On peut ainsi avoir un dispositif similaire fonctionnant en rotation, avec un ressort de torsion. Les portions indiquant la position de repos ou position de travail peuvent alors être réalisées sur une pièce mobile en rotation.

La figure 5 illustre schématiquement, en coupe, un exemple de dispositif de ce type.

La première portion de sangle 51 est solidaire d'un élément 52 mobile en rotation par exemple sur quelques dizaines de degrés. Un ressort spiral 53 tend à ramener cet élément 52 dans sa position de repos. Une zone indicatrice rouge (par exemple) 54 se trouve alors en regard de la fenêtre 55.

Lorsque la portion de sangle 51 est suffisamment tendue, cette tension s'oppose, et est supérieure, à la force de rappel du ressort 53. L'élément mobile en rotation 52 se décale alors légèrement (jusqu'à une butée), et la zone indicatrice verte (par exemple) 56 apparaît en regard de la fenêtre 55.

La deuxième portion de sangle, non représentée, est solidarisée par des moyens de réglage 57 de la longueur, par exemple similaires à ceux déjà décrits, formés sur l'élément 58 qui forme logement pour l'élément 52 mobile en rotation.

Selon d'autres modes de réalisation, et dans le cas ou deux sangles sont prévues, on peut bien sûr voir des moyens de réglage de la longueur des sangles pour le deux portions de sangle, et non seulement pour une seule comme illustrée.

Enfin, comme déjà indiqué, des moyens électriques ou électroniques peuvent être utilisés. Par exemple, on peut prévoir que lorsque les deux éléments de liaison se trouvent en position de travail, ils ferment un circuit électrique, qui allume une diode. Ce contact peut également être associé à l'un des ressorts.

## Revendications

1. Dispositif de liaison d'un siège pour enfant avec une première portion de sangle dans un véhicule automobile,
**caractérisé en ce qu'**il comprend deux éléments de liaison mobiles l'un par rapport à l'autre entre une position de repos et une position de travail, prise lorsque ladite première portion de sangle est tendue,
des moyens de rappel tendant à ramener lesdits éléments de liaison dans ladite position de repos,
et des moyens indicateurs de tension permettant de distinguer si ledit dispositif de liaison est dans ladite position de repos ou dans ladite position de travail.

2. Dispositif de liaison selon la revendication 1, **caractérisé en ce qu'**un premier desdits éléments de liaison porte au moins une fenêtre laissant apparaître un indicateur solidaire du second desdits éléments de liaison, l'aspect dudit indicateur étant différent selon que ledit dispositif de liaison se trouve dans ladite position de repos ou dans ladite position de travail.

3. Dispositif de liaison selon la revendication 2, **caractérisé en ce que** ledit indicateur présente des couleurs différentes selon que ledit dispositif de liaison se trouve dans ladite position de repos ou dans ladite position de travail.

4. Dispositif de liaison selon l'une quelconque des revendications 1 à 3, **caractérisé en ce que** l'un desdits éléments de liaison est monté sur ledit siège.

5. Dispositif de liaison selon l'une quelconque des revendications 1 à 3, **caractérisé en ce que** l'un desdits éléments mobiles est relié audit siège par une seconde portion de sangle.

6. Dispositif de liaison selon l'une quelconque des revendications 1 à 5, **caractérisé en ce qu'**au moins un des éléments de liaison comprend des moyens de réglage de la longueur de ladite première et/ou seconde portions de sangle.

7. Dispositif de liaison selon la revendication 6, **caractérisé en ce que** lesdits moyens de réglage comprennent deux logements parallèles dans lesquels circule ladite portion de sangle.

8. Dispositif de liaison selon l'une quelconque des revendications 1 à 7, **caractérisé en ce que** lesdits moyens de rappel comprennent au moins un ressort s'étendant parallèlement à l'axe du mouvement desdits éléments mobiles l'un par rapport à l'autre.

9. Dispositif de liaison selon l'une quelconque des revendications 1 à 8, **caractérisé en ce que** lesdits éléments de liaison sont mobiles en translation l'un par rapport à l'autre.

10. Dispositif de liaison selon l'une quelconque des revendications 1 à 8, **caractérisé en ce que** lesdits moyens de rappel comprennent au moins un ressort de torsion ou spiral.

11. Dispositif de liaison selon la revendication 1 à 7 et 10, **caractérisé en ce que** lesdits moyens indicateurs comprennent et/ou coopèrent avec une pièce mobile en rotation.

12. Dispositif de liaison selon l'une quelconque des revendications 1 à 11, **caractérisé en ce que** lesdits moyens indicateurs comprennent au moins un contact électrique.

13. Dispositif de liaison selon la revendication 12, **caractérisé en ce que** le ou lesdits contacts électriques agissent sélectivement sur au moins un élément lumineux, lorsque ledit dispositif de liaison est dans une desdites positions.

14. Siège pour enfant destiné à être monté dans un véhicule automobile, **caractérisé en ce qu'**il comprend ou coopère avec un dispositif de liaison dudit siège pour enfant avec une première portion de sangle dans un véhicule automobile,
comprenant deux éléments de liaison mobiles l'un par rapport à l'autre entre une position de repos et une position de travail, prise lorsque ladite première portion de sangle est tendue,
des moyens de rappel tendant à ramener lesdits éléments de liaison dans ladite position de repos,
et des moyens indicateurs de tension permettant de distinguer si ledit dispositif de liaison est dans ladite position de repos ou dans ladite position de travail.

15. Siège pour enfant selon la revendication 14, **caractérisé en ce que** ledit dispositif de liaison est monté en partie supérieure du dossier dudit siège ou de son embase.

16. Siège pour enfant selon l'une quelconque des revendications 14 et 15,
**caractérisé en ce qu'**il comprend des moyens de fixation à des éléments rigides prévus à cet effet dans un véhicule automobile.
